# EUROPEAN PATENT SPECIFICATION

(11) **EP 1 781 457 B1**
(45) Date of publication and mention of the grant of the patent: **17.03.2010**
(21) Application number: 05770783.8
(22) Date of filing: 20.07.2005
(51) Int. Cl.: B29C 44/34, B29C 44/42

(54) **METHOD AND APPARATUS FOR VACUUM FOAMING REFRIGERATOR CABINETS**
VERFAHREN UND VORRICHTUNG ZUM AUFSCHÄUMEN VON KÜHLSCHRÄNKEN UNTER VAKUUM
PROCEDE ET APPAREIL POUR REALISER LE MOUSSAGE SOUS VIDE D'UNE CABINE REFRIGERANTE

(30) Priority: 05.08.2004 IT MI20041609
(43) Date of publication of application: 09.05.2007
(73) Proprietor: Crios, S.P.A., 20081 Abbiategrasso (IT)
(72) Inventor: CORRADI, Piero, I-21047 Saronno (VA) (IT)
(74) Representative: Coloberti, Luigi
(86) International application number: PCT/EP2005/007904
(87) International publication number: WO 2006/013004

(56) References cited:
- DE-A1- 2 915 923
- DE-A1- 19 628 445
- US-A- 4 150 074
- US-A- 5 827 385
- US-B1- 6 228 898
- PATENT ABSTRACTS OF JAPAN vol. 2000, no. 22, 9 March 2001 (2001-03-09) -& JP 2001 147079 A (FUJITSU GENERAL LTD), 29 May 2001 (2001-05-29)

## Description

### BACKGROUND OF THE INVENTION

This invention refers to a method according to claim 1 and to an apparatus according to claim 6 for vacuum foaming, whereby it is possible to considerably accelerate the rising and the expansion step of the foam, ensuring a complete filling of the hollow walls of the cabinet within a comparatively short time.

### STATE OF THE ART

The foaming of refrigerator cabinets is normally carried out by enclosing the cabinet in a jig suitable for counteracting the stronginternal thrusts generated by the expansion of a polyurethane foam.

Usually, a foaming jig comprises a bottom platen for supporting a cabinet to be foamed, four side platens movably supported towards and away from corresponding side walls of the cabinet, and a plug member shaped to penetrate into a compartment or compartments of the cabinet to withstand the internal thrusts of the polyurethane foam during expansion.

Conventional foaming jigs for refrigerator cabinets are described, for example, in IT-A-1 168 059, US-A-4,370,795, US-A-4,411,413 and US-A-4,664,614. In all the cases, the foaming of the refrigerator cabinet takes place at atmospheric pressure, maintaining the jig with the cabinet in a work area open towards the external environment.

The expansion of the polyurethane foam is prevalently linked to the reactivity of the chemical components; consequently, the time required for rising of the foam or for filling the hollow walls of a cabinet is a conditioning factor in determining the length of the working cycle of a foaming installation.

In order to reduce the cycle time and improve the productivity of these installations, in recent years attempts have been made to find chemical solutions to this problem; in fact, new chemical systems and consequent so-called "fast" polyurethane mixtures, having extremely short reaction times, have been developed and tested.

Although the use of highly reactive or fast polyurethane mixtures makes it possible to reduce the cycle times in the foaming of refrigerator cabinets, or in the production of moulded articles, in practice this solution has proved to have several drawbacks; in general, it is not very suitable for foaming refrigerator cabinets, or for foaming moulds of large dimensions, or having particularly complex designs.

In fact, due to the excessive reactivity and polymerisation speed of the polyurethane mixture, the latter tends to rapidly increase its viscosity, and then to solidify before the foam has completely filled the walls of the cabinet or the cavity of the mould, resulting in the production of faulty cabinets or moulded articles.

For this and other reasons, the chemical solution has been considered to be greatly restrictive in the foaming of refrigerator cabinets, using conventional methods and equipment.

The use of reduced pressure or vacuum has also been proposed in order to remove gases from inside of a mould, thereby improving the foaming process; the simple use of vacuum or reduced pressure, in apparatuses for moulding plastic articles, is described for example in US-A-3,970,732, DE-A-43 27 832 and EP-A-954 025. JP-A-2001-147079 suggests the use of vacuum to stick the cabinet walls against the pressing plug.

While the simple reduction of atmospheric pressure, or the simple suction of the air, on the one hand serves to remove the gases that develop inside a mould, also facilitating a certain distribution degree of the foam, when accomplished in this way it is not suitable for foaming refrigerator cabinets and freezers for domestic use or having complex designs, by means of highly reactive polyurethane mixtures. In fact, creating a relatively reduced vacuum, inside the two half shells which form the side walls of a refrigerator cabinet, would tend to deform them, causing them to bent inwards; the use of spacers or thrust members inside the walls of a cabinet, in addition to not completely solving the problem, would further complicate the manufacturing process.

There is consequently a dual need to reduce the cycle time in installations for foaming refrigerator cabinets, and at the same time find new technically feasible solutions, which allow the use of fast polyurethane formulations, characterised by a high reactivity.

### OBJECTS OF THE INVENTION

The main object of this invention is to provide a method according to claim 1 for vacuum foaming refrigerator cabinets, capable of improving the manufacturing process, and at the same time allowing the foaming and complete filling of the hollow walls of a cabinet, in a comparatively short period of time, while maintaining of balanced pressure conditions inside and outside the cabinet during the foaming step.

A further object of the invention is to provide a method and an apparatus for foaming refrigerator cabinets, which is particularly suitable for the use of polyurethane mixtures having high reactivity characteristics.

A still further scope is to provide a foaming method, as mentioned previously, capable of being used with the usual foaming jigs, without having to make substantial modifications to the jigs themselves or to the entire system. '

### BRIEF DESCRIPTION OF THE INVENTION

The above can be achieved by means of a method for foaming refrigerator cabinets according to claim 1, and by means of an apparatus according to claim 6.

The best possible foaming conditions and vacuum degree or depression must be found by suitable preliminary tests, in relation to the polyurethane formulation and the type of refrigerator cabinet to be foamed; for example, it may be found appropriate to work with a vacuum degree ranging from 600 to 900 millibars, when using fast polyurethane formulations, having a 20ö25% shorter polymerisation time compared to the formulations currently in use, at a parity of other process parameters, such as for example the final density of the foam, the thermal conductivity, type and quantity of expanding agent and/or of reaction water.

In general, for the purposes of this specification, in relation to the contemplated application, the term fast reactive polyurethane mixture is understood to mean a mixture having a gel time equivalent to or less than 40-45 seconds, and a polymerisation time less than 300 seconds, for foam thicknesses equivalent to or more than 80 mm.

The use of vacuum, in the foaming of refrigerator cabinets and the like, not only allows the use of fast reactive polyurethane mixtures, as mentioned previously, but also helps to considerably reduce the length of the working cycle, and improves the distribution of the foam during expansion, particularly in cabinets and for moulds of complex design.

### BRIEF DESCRIPTION OF THE DRAWINGS

These and further features of the method and apparatus according to the invention, will be more clearly evident from the following description, with reference to the drawings, in which:
Fig. 1 shows a side view of a foaming apparatus according to the invention;
Fig. 2 shows an enlarged cross-sectional view along the line 2-2 of fig. 1, with the movable bottom platen of the foaming jig in a lowered position, and with the vacuum chamber open;
Fig. 3 shows a cross-sectional view similar to that of the previous figure, with the movable bottom platen in a raised position, and the vacuum chamber in a closed condition;
Fig. 4 shows an enlarged detail of a hollow wall of a refrigerator cabinet;
Fig. 5 shows a flow diagram of the foaming method according to the invention.

### DETAILED DESCRIPTION

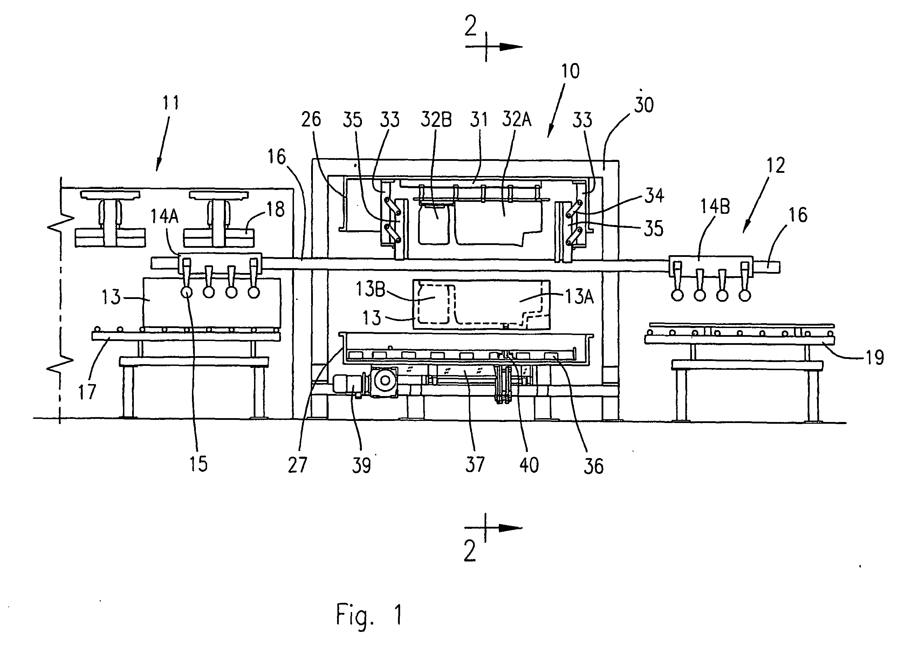

Fig. 1 shows a foaming apparatus for refrigerator cabinets under vacuum conditions, according to a possible embodiment of the invention.

As shown, in its more general form, the apparatus comprises a preheating station 11 for preheating the refrigerator cabinets 13, axially aligned to a foaming station 10, followed by a receiving station 12 from where the foamed cabinets are transferred towards a final foam curing area.

The refrigerator cabinets 13 can be moved from the preheating station 11 to the foaming station 10, and from the latter to the receiving station 12 in any suitable way. For example, it is possible to contemplate the use of one or more trolleys 14 provided with gripping members 15, for example sets of suction cups capable of grasping the cabinet 13 on two sides, as shown; the trolleys 14 are appropriately controlled to run along guide rails 16 which extend longitudinally between the work stations 11, 10 and 12.

The preheating station 11 and receiving station 12 can be wholly conventional; for example, the preheating station 11 can be provided with roller tables 17 for supporting the individual cabinets 13 to be heated by means of one or more heating units 18.

In turn, the foamed cabinet receiving station 12 can comprise one or more roller tables 19 onto which the foamed cabinets are deposited which from time to time are transferred towards a foam curing area, not shown.

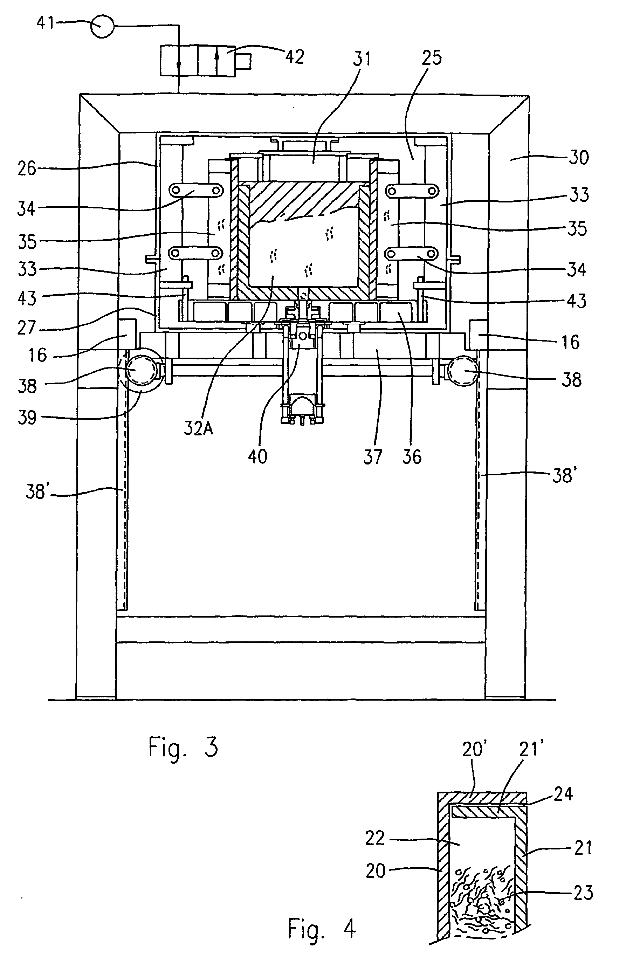

A refrigerator cabinet, as schematically shown in the detail of fig. 4, substantially comprises an external shell 20 and an internal shell 21, having folded edges 20' and 21'; a hollow space 22 is formed in the walls between the two shells into which a chemically reactive mixture must be injected, for example a polyol and isocyanate mixture, to form a polyurethane foam 23 capable of completely filling the hollow space 22 of the cabinet walls.

Since the two shells 20 and 21 are moulded by thermoforming from plastic sheet materials, or from thin metal sheets, if they were to be subjected to vacuum they would tend to bend and buckle inwards.

According to this invention, the vacuum foaming of a refrigerator cabinet can be carried out by generating and maintaining under pressure or partial vacuum conditions, between the inside and outside of the hollow walls of the cabinet, during the injection of the polyurethane mixture and the foaming step, until filling the entire walls.

This can be achieved by enclosing the foaming jig with the cabinet 13, into a vacuum chamber 25 (fig. 3); the vacuum chamber 25 is appropriately structured to be opened and tightly closed, in such a way as to allow the introduction and removal of the refrigerator cabinets 13, and the creation of a certain vacuum degree.

The vacuum chamber 25 can be made in any way whatsoever; in the embodiment shown in figures 1, 2 and 3, the vacuum chamber comprises an upper bell 26 having top and side walls, and a bottom cap 27; the bell 26 is stationary, whilst the cap is vertically movable between a lowered or open position and a risen or closed position of the vacuum chamber or vice versa.

More precisely, in the example shown, the foaming station 10 comprises a frame 30 at which a plate 31 is secured for supporting a plug member forming part of a foaming jig which, depending upon the type of refrigerator, can be composed of a single plug member or, as in the case shown, of two side arranged plug members 32A and 32B which conform to the internal surfaces of corresponding compartments 13A, 13B of the refrigerator cabinet 13.

A plurality of vertical stands 33 are pending from the frame 30 to support, by connecting links 34, the side platens 35 of the foaming jig which, together with the plug members 32A and 32B, react to the thrusts of the expanding foam on the internal surfaces of the walls of the refrigerator. The foaming jig, in the example shown, comprises a bottom platen 36 for supporting the cabinet 13.

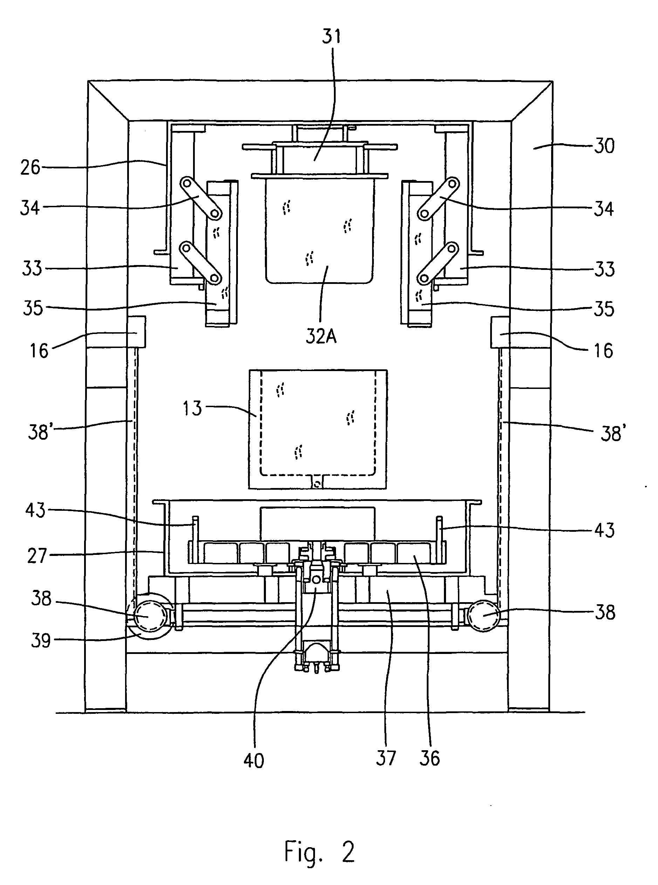

The bottom platen 36 is supported by a table 37 vertically movable between a completely lowered position, shown in figures 1 and 2, and a completely raised position, shown in fig. 3, passing through an intermediate operative position in which allows the depositing and removal of a refrigerator cabinet 13 by means of transfer trolleys 14A and 14B.

The raising and lowering movement of the table 37 can be achieved in any way whatsoever; for example, by hydraulic cylinders or, as shown, by a rack and pinion device 38, 38' shown schematically in fig. 3, operated by an electric motor 39.

Reference 40 in the various figures has been used to indicate a high pressure mixing head for reactive chemical components which must be mixed and injected into the cavities of the walls of the refrigerator cabinet, to form a polyurethane foam; lastly, reference 43 has been used to indicate studs designed to maintain the bottom platen 36 coupled to the side platens 35 of the jig, during the injection of the mixture and expansion of the polyurethane foam, as shown in fig. 3.

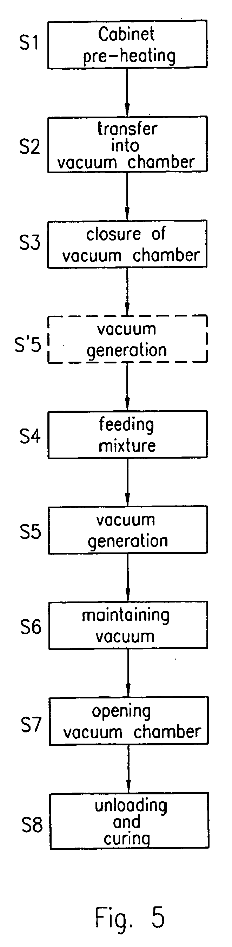

As previously mentioned, and as will be illustrated in greater detail with reference to the flow diagram of fig. 5, the injection and foaming steps of the polyurethane mixture take place under partial vacuum, by generating and maintaining a balanced vacuum degree, for example between 600 and 900 millibars in the hollow space of the walls between the external shell 20 and the internal shell 21 of the refrigerator cabinet, and a closed environment containing the foaming jig and the cabinet.

In this connection, the foaming jig with the refrigerator cabinet 13 is enclosed in a vacuum chamber 25 comprising a downwardly open upper bell 26, appropriately secured to the frame 30 of the apparatus, and a bottom cap 27, secured to the movable table 37.

The side walls of the bell 26 and the cap 27 have peripheral edges appropriately shaped and/or provided with sealing means, to ensure the necessary vacuum seal in the raised condition of the bottom cap 27 in which it closes the vacuum chamber 25; lastly, reference 41 in the various figures has been used to indicate a pump or vacuum source, connected to the bell 26 by a control valve 42; control means are operatively connected to the valve device and vacuum source, to sense and provide vacuum balanced condition into the vacuum chamber, inside and outside the cabinet in the foaming jig.

In the specific case, the vacuum chamber 25 has been shown as comprising an upper bell and a lower cap movable between a lowered position for opening the chamber 25, and a raised tightly closed position. It is obvious however that within the scope of the invention, the vacuum chamber for containing the foaming jig with the refrigerator cabinet, may also be differently shaped or performed compared to the one shown, provided it is suitable for achieving the desired scope.

The method for vacuum foaming refrigerator cabinets and the working of the apparatus will be illustrated in greater detail hereunder with reference to the preceding figures and the flow diagram of fig. 5.

The refrigerator cabinets 13 to be foamed are initially introduced into the preheating oven 11, where they remain for the length of time necessary to bring the cabinet up to a given temperature (step S1) necessary for the subsequent foaming of the polyurethane mixture.

Assuming that a preceding cabinet already foamed has been removed from the foaming station 10, under these conditions the movable table 37 with the bottom platen 36 of the foaming jig, is in the fully lowered condition shown by the continuous lines in figures 1 and 2.

When the refrigerator cabinet 13 has been heated to the desired temperature, the trolley 14A transfers the cabinet 13 to the foaming station 10 (step S2) bringing it to rest above the platen 36, in a condition aligned with the plug members 32A, 32B of the foaming jig; at this point the table 37 is raised to the intermediate position, illustrated by the broken line in fig. 2, while the trolley 14A is resting the cabinet 13 on the platen 36.

After the trolley 14A has moved back again into the oven 11, an electronic control unit which controls the working of the entire apparatus, actuates the raising of the table 37 with the platen 36 and the cabinet 13, in the upper position of fig. 3.

Under these conditions, the plug members 32A, 32B are inside the cabinet 13, while the four side platens 35 of the foaming jig, in a per se known way, are moved against the external surfaces of the side walls of the cabinet 13.

Simultaneously, the bottom platen 36 of the foaming jig is coupled to the side platens 35 of the jig by the studs 43; the vacuum chamber 25 in turn is hermetically closed (step S3) in that the peripheral edges of the cap 27 have come into contact with the peripheral edges of the overlying bell 26.

At this point the chamber 25 can be connected to the vacuum pump 41 before the polyurethane mixture is fed into the hollow space 22 of the walls of the refrigerator cabinet 13 (step S'5) or, alternatively, the vacuum in the chamber 25 can be generated at the same time as the feeding of the polyurethane mixture, or immediately after (step S5). The choice of the moment the vacuum is created will depend upon specific processing requirements and may be determined each time by appropriate tests.

Upon completion of the feeding step for the polyurethane mixture, and after having reached the desired vacuum degree, the vacuum is maintained for a pre-established time (step S6) sufficient to allow the complete expansion of the foam and filling of the hollow walls of the cabinet 13.

After the foam has completed its expansion step and, if necessary, after it has attained a certain degree of hardness sufficient to withstand the atmospheric pressure, to avoid deformation, the vacuum chamber is opened (step S7) by lowering the movable table 37 with the platen 36 and the foamed refrigerator, and brought to rest again in the intermediate position of fig. 1.

At this point the trolley 14B enters the foaming station 10, grips the foamed cabinet 13 holding it raised, while the movable table 37 with the platen 36 is lowered completely, thereby enabling the cabinet to be moved and rested on the table 19 of the receiving station 12 (step S8) and then be conveyed towards an area for completion of the curing step of the foam.

In the meantime, another cabinet 13 to be foamed has been introduced and preheated in the oven 11, and is therefore ready to be moved to the foaming station 10, as described previously.

From what has been described and shown in the accompanying drawings, it will be evident that the invention is addressed to a method and an apparatus for vacuum foaming of refrigerator cabinets and the like, whereby it is possible to accelerate and control the expansion of the foam, by using highly reactive polyurethane formulations, ensuring at the same time a complete filling or packing of the walls of the refrigerator, within a comparatively shorter period of time compared to the conventional technologies.

The use of vacuum in the foaming of refrigerator cabinets, according to the previously mentioned procedures, makes it possible to use more highly reactive polyurethane mixtures, reducing the length of the work cycle, and to find an accurate equilibrium between the packing speed and satisfactory distribution of the foam, which proves difficult to achieve with the conventional technologies.

It is understood that what has been described and shown in the accompanying drawings has been given purely by way of example in order to illustrate the general features of the method and the foaming apparatus according to the invention, and of a preferential embodiment.

Therefore, other modifications or variations may be made both to the method and to the apparatus itself without thereby departing from the scope of the accompanying claims.

## Claims

1. A method for vacuum foaming a refrigerator cabinet (13) by feeding a chemically reactive polyurethane mixture into the hollow walls of a cabinet (13) contained in a foaming jig (35) to form a polyurethane foam, **characterised by** the steps of:
providing a vacuum chamber (25) suitable to contain the foaming jig (35)
enclosing the foaming jig (35) and the cabinet (13) in said vacuum chamber (25);
feeding a chemically high reactive polyurethane mixture having a gel time equivalent to or less than 40 seconds into said hollow walls of the cabinet (13),
connecting the vacuum chamber (25) to a vacuum source (41) at a chosen time; and
maintaining vacuum controlled conditions in the vacuum chamber (25), and in the cabinet (13) for a time enabling the foaming polyurethane mixture to rise and fill the hollow walls of the cabinet (13), during the foaming step.

2. The method for vacuum foaming refrigerator cabinets according to claim 1, **characterised by** generating a vacuum degree in the vacuum chamber (25) and in the foaming jig (35), at the chosen time before the feeding of the reactive mixture into the cabinet walls (13).

3. The method for vacuum foaming refrigerator cabinets according to claim 1, **characterised by** generating a vacuum degree into the vacuum chamber (25) and in the foaming jig (35) at the chosen time during the feeding of the reactive mixture into the cabinet walls (13).

4. The method for vacuum foaming refrigerator cabinets according to claim 1, **characterised by** generating a vacuum degree in the vacuum chamber (25) and in the foaming jig (35) at the chosen time immediately after the feeding of the reactive mixture into the cabinet walls (13).

5. The method for vacuum foaming refrigerator cabinets according to claim 1, **characterised by** generating a vacuum degree ranging from 600 to 900 millibars.

6. An apparatus for vacuum foaming a refrigerator cabinet (13), comprising a foaming jig (35), a vacuum chamber (25) and means (40) for feeding a chemically high reactive polyurethane mixture into hollow walls of the cabinet (13), **characterised by** comprising an operable and sealingly closeable vacuum chamber (25) suitable for containing the refrigerator cabinet (13) in the foaming jig (35); valve means (42) for connecting said vacuum chamber (25) to a source of vacuum (41) and control means for providing vacuum balanced conditions in the vacuum chamber (25), inside and outside the cabinet (13), during foaming of the cabinet walls (13).

7. The apparatus for vacuum foaming refrigerator cabinets according to claim 6, **characterised in that** the vacuum chamber (25) comprises an upper bell-shaped member (26) and a bottom cap-shaped member (27), one of said bell-shaped and cap-shaped members (26; 27) being fastened to a supporting frame, the other one of said bell-shaped and cap-shaped members (26; 27) being movably supported between a risen position and a lowered position to close respectively open the vacuum chamber (25), and control means (37, 38, 39) to move said other one of the bell-shaped and cap-shaped members (26; 27) to allow the introduction and removal of the refrigerator cabinet (13).

8. The apparatus for vacuum foaming refrigerator cabinets (13) according to claim 7, **characterised by** comprising a preheating station (11) for the cabinets (13), a foaming station (10) comprising the vacuum chamber (25), a receiving station (12) for the foamed cabinets, and means (14A; 14B) for moving the preheated cabinets (13) from the preheating station. (11) to the foaming station (10) into the vacuum chamber (25), and respectively the foamed cabinets (13) from the foaming station (10) to the receiving station (12).

9. The apparatus for vacuum foaming refrigerator cabinets according to claim 8, **characterised in that** the means for moving the refrigerator cabinets (13) comprise a first and a second trolley (14A; 14B), each trolley being provided with gripping members (15) for the cabinets (13), said trolleys (14A; 14B) being movable along guide rails (16) which extend between the preheating station (11) and the receiving station (12), through the intermediate foaming station (10).

10. The apparatus for vacuum foaming refrigerator cabinets according to claim 7, **characterised by** comprising lifting means (38, 38') for moving a support table (37) for the cap-shaped member (27) of the vacuum chamber (25), and a bottom platen (36) of the jig (35), between a completely lowered position in which opens the vacuum chamber (25), a completely raised position in which closes the vacuum chamber (25), and an intermediate operative position for deposition and removal of the refrigerator cabinets (13) inside the vacuum chamber (25).

## Patentansprüche

1. Verfahren zum Vakuum-Aufschäumen eines Kühlschranks (13) durch Einleiten einer chemisch reaktiven Polyurethan-Mischung in die hohlen Wände eines Schranks (13), der in einer Aufschäum-Anlage (35) eingeschlossen ist, um einen Polyurethan-Schaum zu bilden, **gekennzeichnet durch** die Schritte:
Bereitstellen einer Vakuumkammer (25), die geeignet ist, um die Aufschäum-Anlage (35) aufzunehmen;
Umschließen der Aufschäum-Anlage (35) und des Schranks (13) in der Vakuumkammer (25);
Einleiten einer chemisch sehr reaktiven Polyurethan-Mischung, die eine Gelzeit äquivalent zu oder kleiner als 40 Sekunden hat, in die hohlen Wände des Schranks (13);
Verbinden der Vakuumkammer (25) mit einer Vakuumquelle (41) zu einem ausgewählten Zeitpunkt; und
Aufrechterhalten von vakuumgesteuerten Zuständen in der Vakuumkammer (25) und in dem Schrank (13) für einen Zeitraum, innerhalb dessen es der aufschäumenden Polyurethan-Mischung ermöglicht wird, sich während des Aufschäumschritts auszubreiten und die hohlen Wände des Schranks (13) auszufüllen.

2. Verfahren zum Vakuum-Aufschäumen von Kühlschränken gemäß Anspruch 1, **gekennzeichnet durch** Erzeugen eines Vakuum-Levels in der Vakuumkammer (25) und in der Aufschäum-Anlage (35) zu dem ausgewählten Zeitpunkt vor dem Einleiten der reaktiven Mischung in die Schrankwände (13).

3. Verfahren zum Vakuum-Aufschäumen von Kühlschränken gemäß Anspruch 1, **gekennzeichnet durch** Erzeugen eines Vakuum-Levels in der Vakuumkammer (25) und in der Aufschäum-Anlage (35) zu dem ausgewählten Zeitpunkt während des Einleitens der reaktiven Mischung in die Schrankwände (13).

4. Verfahren zum Vakuum-Aufschäumen von Kühlschränken gemäß Anspruch 1, **gekennzeichnet durch** Erzeugen eines Vakuum-Levels in der Vakuumkammer (25) und in der Aufschäum-Anlage (35) zu dem ausgewählten Zeitpunkt unmittelbar nach dem Einleiten der reaktiven Mischung in die Schrankwände (13).

5. Verfahren zum Vakuum-Aufschäumen von Kühlschränken gemäß Anspruch 1, **gekennzeichnet durch** Erzeugen eines Vakuum-Levels, der von 600 von 900 Millibar reicht.

6. Vorrichtung zum Vakuum-Aufschäumen eines Kühlschranks (13), mit einer Aufschäum-Anlage (35), einer Vakuumkammer (25) und Mitteln (40) zum Einleiten einer chemisch sehr reaktiven Polyurethan-Mischung in hohle Wände des Schranks, **dadurch gekennzeichnet, dass** eine steuerbare und abdichtend verschließbare Vakuumkammer (25) vorgesehen ist, die geeignet ist, um den Kühlschrank (13) in der Aufschäum-Anlage (35) aufzunehmen; und dass Ventilmittel (42), um die Vakuumkammer (25) mit einer Vakuumquelle (41) zu verbinden, und Steuermittel vorgesehen sind, um ausgeglichene Vakuumzustände in der Vakuumkammer (25), innerhalb und außerhalb des Schranks (13), während des Aufschäumens der Schränkwände (13) zu bewirken.

7. Vorrichtung zum Vakuum-Aufschäumen von Kühlschränken gemäß Anspruch 6, **dadurch gekennzeichnet, dass** die Vakuumkammer (25) ein oberes, glockenförmiges Bauteil (26) und ein unteres, kappenförmiges Bauteil (27) aufweist, wobei eines von dem glockenförmigen und dem kappenförmigen Bauteil (26; 27) an einem Halterahmen befestigt ist, wobei das andere von dem glockenförmigen und dem kappenförmigen Bauteil (26; 27) bewegbar zwischen einer angehobenen Position und einer abgesenkten Position gehalten ist, um die Vakuumkammer (25) zu schließen bzw. zu öffnen, sowie Steuermittel (37, 38, 39) aufweist, um dieses eine von dem glockenförmigen und dem kappenförmigen Bauteil (26; 27) zu bewegen, um das Einsetzen und Herausnehmen des Kühlschranks (13) zu ermöglichen.

8. Vorrichtung zum Vakuum-Aufschäumen von Kühlschränken (13) gemäß Anspruch 7, **dadurch gekennzeichnet, dass** eine Vorheizstation (11) für die Schränke (13), eine Aufschäumstation (10), die die Vakuumkammer (25) umfasst, eine Aufnahmestation (12) für die aufgeschäumten Schränke, und Mittel (14A; 14B) vorgesehen sind, um die vorgeheizten Schränke (13) von der Vorheizstation (11) zur Aufschäumstation (10) in der Vakuumkammer (25) zu bewegen bzw. um die aufgeschäumten Schränke (13) von der Aufschäumstation (10) zur Empfangsstation (12) zu bewegen.

9. Vorrichtung zum Vakuum-Aufschäumen von Kühlschränken gemäß Anspruch 8, **dadurch gekennzeichnet, dass** die Mittel zum Bewegen der Kühlschränke (13) einen ersten und einen zweiten Wagen (14A; 14B) umfassen, wobei jeder Wagen mit Greifbauteilen (15) für die Schränke (13) versehen ist, wobei die Wagen (14A; 14B) entlang von Führungsschienen (16) bewegbar sind, die zwischen der Vorheizstation (11) und der Empfangsstation (12) verlaufen, und zwar durch die dazwischen angeordnete Aufschäumstation (10).

10. Vorrichtung zum Vakuum-Aufschäumen von Kühlschränken gemäß Anspruch 7, **dadurch gekennzeichnet, dass** Hebemittel (38, 38') vorgesehen sind, um einen Haltetisch (37) für das kappenförmige Bauteil (27) der Vakuumkammer (25) und eine Bodenplatte (36) der Anlage (35) zwischen einer vollständig abgesenkten Position, in der die Vakuumkammer (25) geöffnet ist, einer vollständig angehobenen Position, in der die Vakuumkammer (25) geschlossen ist, und einer zwischenliegenden Betriebsposition zu bewegen, um die Kühlschränke (13) in die Vakuumkammer (25) einzusetzen und herauszunehmen.

## Revendications

1. Procédé pour le moussage sous vide d'une armoire frigorifique (13) en alimentant un mélange de polyuréthane chimiquement réactif dans des parois creuses d'une armoire (13) enfermée dans un bâti de moussage (35) pour former une mousse de polyuréthanne, **caractérisé par** les étapes consistant à :
prédisposer une chambre à vide (25) adaptée pour contenir le bâti de moussage (35) ;
enfermer le bâti de moussage (35) et l'armoire (13) dans ladite chambre à vide (25) ;
alimenter un mélange de polyuréthane hautement réactif chimiquement présentant un temps de gélification équivalent ou inférieur à 40 secondes dans lesdites parois creuses de l'armoire (13) ;
relier la chambre à vide (25) à une source de vide (41) à un instant choisi ; et
maintenir des conditions de vide contrôlées dans la chambre à vide (25) et dans l'armoire (13) pendant un temps permettant au mélange de polyuréthanne moussant de monter et remplir les parois creuses de l'armoire (13), durant l'étape de moussage.

2. Procédé pour le moussage sous vide d'armoires frigorifique selon la revendication 1, **caractérisé par** la génération d'un degré de vide dans la chambre à vide (25) et dans le bâti de moussage (35) à un instant choisi avant l'alimentation du mélange réactif dans les parois de l'armoire (13).

3. Procédé pour le moussage sous vide d'armoires frigorifique selon la revendication 1, **caractérisé par** la génération d'un degré de vide dans la chambre à vide (25) et dans le bâti de moussage (35) à un instant choisi durant l'alimentation du mélange réactif dans les parois de l'armoire (13).

4. Procédé pour le moussage sous vide d'armoires frigorifique selon la revendication 1, **caractérisé par** la génération d'un degré de vide dans la chambre à vide (25) et dans le bâti de moussage (35) à un instant choisi immédiatement après l'alimentation du mélange réactif dans les parois de l'armoire (13).

5. Procédé pour le moussage sous vide d'armoires frigorifique selon la revendication 1, **caractérisé par** la génération d'un degré de vide allant de 600 à 900 millibars.

6. Dispositif pour le moussage sous vide d'une armoire frigorifique (13) comprenant un bâti de moussage (35), une chambre à vide (25) et des moyens (40) pour alimenter un mélange de polyuréthane chimiquement hautement réactif dans des parois creuses de l'armoire (13), **caractérisé en ce qu'**il comprend une chambre à vide pouvant être commandée et fermée hermétiquement (25), adaptée pour contenir l'armoire frigorifique (13) dans le bâti de moussage (35) ; des moyens de vanne (42) pour relier ladite chambre à vide (25) à une source de vide (41) et des moyens de commande pour fournir des conditions de vide équilibrées dans la chambre à vide (25), à l'intérieur et à l'extérieur de l'armoire (13), durant le moussage des parois de l'armoire (13).

7. Dispositif pour le moussage sous vide d'armoires frigorifique selon la revendication 6, **caractérisé en ce que** la chambre à vide (25) comprend un élément supérieur en forme de cloche (26) et un élément inférieur en forme de chapeau (27), un desdits éléments en forme de cloche et en forme de chapeau (26 ; 27) étant fixé à un châssis de support, l'autre desdits éléments en forme de cloche et en forme de chapeau (26 ; 27) étant supporté de manière amovible entre une position soulevée et une position abaissée pour respectivement fermer et ouvrir la chambre à vide (25), et des moyens de commande (37, 38, 39) pour déplacer ladite autre desdits éléments en forme de cloche et en forme de chapeau (26 ; 27) pour permettre l'introduction et l'enlèvement de l'armoire frigorifique (13).

8. Dispositif pour le moussage sous vide d'armoires frigorifique selon la revendication 7, **caractérisé en ce qu'**il comprend une station de préchauffage (11) pour les armoires (13), une station de moussage (10) comprenant la chambre à vide (25), une station de réception (12) pour les armoires soumises au moussage, et des moyens (14A ; 14B) pour déplacer les armoires préchauffées (13) de la station de préchauffage (11) à la station de moussage (10) dans la chambre à vide (25) et, respectivement, les armoires soumises au moussage (13) de la station de moussage (10) à la station de réception (12).

9. Dispositif pour le moussage sous vide d'armoires frigorifique selon la revendication 8, **caractérisé en ce que** les moyens de déplacement des armoires frigorifiques (13) comprennent un premier et un deuxième chariot (14A ; 14B), chaque chariot étant équipé d'éléments de préhension (15) pour les armoires (13), lesdits chariots (14A ; 14B) étant mobiles le long de rails de guidage (16) qui s'étendent entre la station de préchauffage (11) et la station de réception (12), à travers la station intermédiaire de moussage (10).

10. Dispositif pour le moussage sous vide d'armoires frigorifique selon la revendication 7, **caractérisé en ce qu'**il comprend des moyens de levage (38, 38') pour déplacer une table de support (37) pour l'élément en forme de chapeau (27) de la chambre à vide (25), et un plateau inférieur (36) du bâti (35), entre une position complètement soulevée dans laquelle la chambre à vide (25) s'ouvre, une position complètement abaissée dans laquelle la chambre à vide (25) se ferme, et une position fonctionnelle intermédiaire pour l'installation et l'enlèvement des armoires frigorifiques (13) à l'intérieur de la chambre à vide (25).
